(19) Europäisches Patentamt
European Patent Office
Office européen des brevets

(11) **EP 4 364 315 B1**

(12) **FASCICULE DE BREVET EUROPEEN**

(45) Date de publication et mention
de la délivrance du brevet:
**18.06.2025  Bulletin 2025/25**

(21) Numéro de dépôt: **22750857.9**

(22) Date de dépôt: **01.07.2022**

(51) Classification Internationale des Brevets (IPC):
***H04B 7/185*** *(2006.01)*

(52) Classification Coopérative des Brevets (CPC):
**H04B 7/18513; H04B 7/18519**

(86) Numéro de dépôt international:
**PCT/FR2022/051316**

(87) Numéro de publication internationale:
**WO 2023/275501 (05.01.2023 Gazette 2023/01)**

(54) **PROCÉDÉ DE COMMUNICATION ENTRE UN SATELLITE SERVEUR D'UN RÉSEAU DE COMMUNICATION SATELLITAIRE ET UN ÉQUIPEMENT UTILISATEUR**

VERFAHREN ZUR KOMMUNIKATION ZWISCHEN EINEM SERVER-SATELLITEN EINES SATELLITENKOMMUNIKATIONSNETZWERKS UND EINER BENUTZERVORRICHTUNG

METHOD FOR COMMUNICATION BETWEEN A SERVER SATELLITE OF A SATELLITE COMMUNICATION NETWORK AND A USER DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2021  FR 2107174**

(43) Date de publication de la demande:
**08.05.2024  Bulletin 2024/19**

(73) Titulaire: **Orange**
**92130 Issy-les-Moulineaux (FR)**

(72) Inventeur: **KELIF, Jean-Marc**
**92326 CHÂTILLON CEDEX (FR)**

(56) Documents cités:
**WO-A1-2021/023910      WO-A1-2021/023910**
**US-A1- 2014 087 652      US-A1- 2014 087 652**
**US-B1- 9 748 989      US-B1- 9 748 989**

- **GUPTA NISHANT ET AL: "Green Satellite Communication Link Design, Optimization, and Performance Analysis", 2020 IEEE 7TH UTTAR PRADESH SECTION INTERNATIONAL CONFERENCE ON ELECTRICAL, ELECTRONICS AND COMPUTER ENGINEERING (UPCON), IEEE, 27 November 2020 (2020-11-27), pages 1 - 5, XP033888132, DOI: 10.1109/ UPCON50219.2020.9376512**
- **GUPTA NISHANT ET AL: "Green Satellite Communication Link Design, Optimization, and Performance Analysis", 2020 IEEE 7TH UTTAR PRADESH SECTION INTERNATIONAL CONFERENCE ON ELECTRICAL, ELECTRONICS AND COMPUTER ENGINEERING (UPCON), IEEE, 27 November 2020 (2020-11-27), pages 1 - 5, XP033888132, DOI: 10.1109/ UPCON50219.2020.9376512**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention se rapporte au domaine général des télécommunications. Elle concerne plus particulièrement un réseau de communication satellitaire.

L'invention trouve une application privilégiée mais non limitative dans le cadre de services mobiles s'appuyant sur un réseau de communication satellitaire.

De façon connue en soi, un réseau de communication satellitaire s'appuie sur une pluralité de satellites placés sur orbite et déployés pour couvrir une zone géographique donnée de la surface terrestre. Pour transmettre des données vers un équipement utilisateur du réseau satellitaire, un satellite, dit « satellite serveur », émet un signal radio vers l'équipement utilisateur avec une certaine puissance dite d'émission. On note que le satellite serveur est celui qui couvre la zone géographique dans laquelle se trouve l'équipement utilisateur (ex. l'équipement utilisateur se trouve dans la zone couverte par le lobe principal de l'antenne du satellite en question) et auquel l'équipement utilisateur est connecté ou associé.

Le signal reçu par l'équipement utilisateur véhicule donc un signal utile dont la puissance dépend de la puissance d'émission appliquée par le satellite et de caractéristiques propres au satellite comme par exemple son orbite (qui détermine notamment son altitude). En outre, ce signal reçu véhicule également un signal d'interférence généré par les autres satellites du réseau satellitaire qui émettent simultanément en utilisant les mêmes ressources que le satellite serveur (typiquement la même fréquence).

Chaque satellite du réseau satellitaire autre que le satellite serveur est susceptible de générer un signal interférant avec le signal utile émis par le satellite serveur : l'interférence ainsi générée dépend de l'altitude du satellite en question, de sa puissance d'émission et de sa position relative par rapport à la zone couverte par le satellite serveur. L'impact en résultant sur les performances du satellite serveur n'est pas négligeable car tous les satellites du réseau satellitaire émettent simultanément vers un grand nombre d'équipements utilisateurs dans la même bande de fréquences.

Le document de N. Gupta et S. Bitragunta, intitulé « Green Satellite Communication Link Design, Optimization and Performance Analysis », IEEE 7th Uttar Pradesh Section International Conference on Electrical, Electronics and Computer Engineering (UPCON), 2020, pages 1-5, s'intéresse aux performances d'un réseau de communication satellitaire en termes d'efficacité énergétique $\varepsilon_\eta$, celle-ci étant définie comme le ratio de l'efficacité spectrale et de la puissance totale consommée de bout en bout par le réseau satellitaire, et de probabilité de coupure (ou « outage probability »), celle-ci étant dérivée à partir de l'efficacité énergétique. Plus spécifiquement, Gupta et al. définit l'efficacité énergétique $\varepsilon_\eta$ de la façon suivante :

$$\varepsilon_\eta = \frac{\log_2\left(1 + CNR_{eff}\right)}{P_{tot}}$$

où $CNR_{eff}$ désigne le ratio de la puissance utile et de la puissance du bruit thermique prises au niveau d'une station radio terrestre, et $P_{tot}$ la consommation de puissance totale de bout en bout du réseau satellitaire.

L'impact de différents paramètres de transmission (gain d'antennes, gain de puissance du canal, etc.) sur l'efficacité énergétique et sur la probabilité de coupure est analysé par Gupta et al. La possibilité de prendre en compte des interférences dans le calcul de l'efficacité énergétique $\varepsilon_\eta$ en cas de partage du spectre de fréquences est par ailleurs évoquée brièvement dans Gupta et al. Toutefois, aucune indication n'est donnée sur la nature des interférences en question ni sur la façon de le faire.

Par conséquent, une telle approche ne permet pas à un opérateur d'un réseau satellitaire de s'assurer, en cas d'utilisation simultanée des mêmes ressources par plusieurs de ses satellites, des performances de son réseau, et notamment qu'il fournit une qualité de service donnée à un équipement utilisateur.

## Exposé de l'invention

L'invention permet notamment de palier à cet inconvénient en proposant un procédé de communication entre un satellite dit serveur d'un réseau de communication satellitaire et un équipement utilisateur, ledit procédé comprenant :

- une étape de détermination d'au moins un paramètre de transmission de la communication à partir d'une connaissance d'un débit de la communication en fonction de caractéristiques de transmission du satellite serveur et d'une topologie du réseau satellitaire dans une zone dite d'interférence où se trouvent des satellites susceptibles d'interférer la communication ; et
- une étape de configuration du satellite serveur pour appliquer ledit au moins un paramètre de transmission déterminé lors de la communication avec l'équipement utilisateur.

Corrélativement, l'invention vise également un dispositif de détermination d'au moins un paramètre de transmission d'une communication entre un satellite dit serveur d'un réseau de communication satellitaire et un équipement utilisateur, ledit dispositif comprenant :

- un module de détermination, paramétré pour déterminer ledit au moins un paramètre de transmission de la communication à partir d'une connaissance d'un débit de la communication en fonction de caractéristiques de transmission du satellite serveur et d'une topologie du réseau satellitaire dans une zone dite d'interférence où se trouvent des satellites susceptibles d'interférer la communication ; et
- un module de configuration, paramétré pour configurer le satellite serveur pour appliquer ledit au moins un paramètre de transmission déterminé lors de la communication avec l'équipement utilisateur.

Dans un mode particulier de réalisation, ledit au moins un paramètre de transmission de la communication est déterminé lors de l'étape de détermination, respectivement ledit module de détermination est paramétré pour déterminer ledit au moins un paramètre de transmission, à partir d'une connaissance du débit de la communication en fonction d'une bande passante allouée à la communication, d'une puissance d'émission du satellite serveur, d'une distance entre le satellite serveur et l'équipement utilisateur, d'un rapport des gains d'antenne du satellite serveur et desdits satellites susceptibles d'interférer la communication, et de ladite topologie du réseau satellitaire dans ladite zone d'interférence.

L'invention s'applique de façon privilégiée à une communication dans le sens descendant, c'est-à-dire du satellite serveur vers l'équipement utilisateur.

Aucune limitation n'est attachée à la nature de l'équipement utilisateur. Il peut s'agir de n'importe quel dispositif récepteur, comme par exemple un terminal fixe ou mobile client du réseau satellitaire (ex. un téléphone intelligent, un ordinateur, etc.), ou une station radio terrestre d'émission/réception.

Par ailleurs, le dispositif de détermination peut être intégré dans un satellite du réseau satellitaire et en particulier dans le satellite serveur, ou dans un dispositif de gestion du réseau satellitaire (ex. un centre de gestion du réseau satellitaire de l'opérateur situé au sol).

Ainsi, dans un mode particulier de réalisation, l'invention vise également un satellite d'un réseau satellitaire comprenant un dispositif de détermination selon l'invention d'au moins un paramètre de transmission d'une communication entre le satellite et un équipement utilisateur.

L'invention vise aussi selon un autre mode de réalisation un dispositif de gestion d'un réseau satellitaire comprenant un dispositif de détermination selon l'invention d'au moins un paramètre de transmission d'une communication entre un satellite dit serveur du réseau satellitaire et un équipement utilisateur.

L'invention propose donc de configurer un satellite dit serveur pour optimiser les performances d'un réseau satellitaire lors d'une communication en liaison descendante du satellite serveur avec un équipement utilisateur en tenant compte de l'influence sur le débit de la communication non seulement des caractéristiques de transmission du satellite serveur (ex. puissance d'émission, gain d'antennes, distance à l'équipement utilisateur) mais également de la topologie du réseau satellitaire.

La prise en compte de la topologie du réseau satellitaire permet avantageusement de caractériser l'impact sur le débit de la communication considérée des autres satellites du réseau satellitaire, et en particulier de l'interférence générée par ces derniers sur la communication. On s'attache plus particulièrement, conformément à l'invention, à l'impact global des satellites du réseau se trouvant dans une zone dite d'interférence dans laquelle les communications des satellites avec des équipements utilisateurs du réseau satellitaire sont susceptibles de générer des interférences sur la communication de l'équipement utilisateur avec le satellite serveur si les satellites en question utilisent simultanément les mêmes ressources (ex. même bande de fréquences, mêmes codes, etc.) que le satellite serveur lors de la communication avec l'équipement utilisateur. Une telle zone d'interférence a par exemple la forme, lorsque tous les satellites du réseau sont situées à une même altitude (hauteur), d'une calotte sphérique centrée sur l'équipement utilisateur, de rayon l'orbite des satellites du réseau satellitaire, et délimitée en prenant en compte un angle d'élévation minimum des satellites pour être susceptibles d'interférer la communication.

La topologie du réseau satellitaire dans la zone d'interférence est exploitée par l'invention pour modéliser de façon très simple les interférences générées sur la communication entre le satellite serveur et l'équipement utilisateur par les autres satellites du réseau satellitaire utilisant simultanément les mêmes ressources que le satellite serveur. Plus spécifiquement, l'invention ne s'attache pas à déterminer de façon fastidieuse la contribution individuelle de chaque satellite du réseau sur la communication, puis à sommer les contributions individuelles des satellites, mais envisage l'impact du réseau satellitaire sur la communication dans sa globalité grâce à la connaissance de la topologie du réseau satellitaire dans la zone d'interférence.

Typiquement, la topologie du réseau satellitaire peut comprendre une densité de satellites du réseau satellitaire susceptibles d'interférer la communication dans la zone d'interférence, une altitude du satellite serveur et/ou un angle d'élévation minimum des satellites susceptibles d'interférer la communication. En variante, d'autres éléments peuvent être envisagés, comme par exemple, pour chaque satellite du réseau satellitaire, une probabilité que ce satellite se trouve dans la zone d'interférence et soit susceptible d'interférer la communication (du fait de son utilisation simultanée des mêmes ressources que le satellite serveur).

Les satellites présents dans la zone d'interférence couvrent une zone géographique intersectant en tout ou partie la zone géographique de couverture du satellite serveur (dans laquelle se trouve l'équipement utilisateur) et sont donc susceptibles de générer une interférence globale au niveau de l'équipement utilisateur qui dépend de la densité des satellites utilisant les mêmes ressources que le satellite serveur dans cette zone.

On note que si l'on veut maximiser le débit offert par le réseau satellitaire, il convient de maximiser l'utilisation des ressources : il en résulte une utilisation par les satellites de la totalité de leurs ressources. Dans une telle configuration, l'ensemble des satellites se trouvant dans la zone d'interférences est susceptible d'interférer la communication du satellite serveur avec l'équipement utilisateur car la probabilité que ces satellites utilisent simultanément les mêmes ressources que la communication tend vers 1. La densité des satellites susceptibles d'interférer la communication se trouvant dans la zone d'interférence est donc égale ou sensiblement égale à la densité des satellites du réseau satellitaire se trouvant dans la zone d'interférence à l'exception du satellite serveur. Si toutefois l'hypothèse de l'utilisation de la totalité des ressources par les satellites du réseau satellitaire ne s'applique pas, il convient de considérer la densité des satellites se trouvant dans la zone d'interférences et utilisant de façon simultanée les mêmes ressources que la communication en question.

L'impact global du réseau satellitaire sur la communication peut alors être défini comme l'intégrale de la puissance reçue par l'équipement utilisateur en provenance des satellites du réseau susceptibles d'interférer la communication se trouvant dans la zone d'interférence (à l'exception du satellite serveur). Or via des considérations géométriques, il est possible à partir de cette intégrale d'obtenir une expression très simple qui ne dépend que de la topologie du réseau satellitaire et des gains d'antenne et des puissances d'émission des satellites considérés.

On note que parmi les satellites présents dans la zone d'interférence, seuls certains sont susceptibles de générer une interférence non négligeable, à savoir ceux qui se trouvent à un angle d'élévation donné minimum (par exemple 30°). On peut ainsi, dans un mode particulier de réalisation, négliger l'impact des satellites se trouvant en deçà de cet angle d'élévation minimum sans pour autant sacrifier la précision du ou des paramètres de transmission déterminés conformément à l'invention.

L'invention propose donc une méthode originale et précise permettant d'évaluer les performances d'un réseau satellitaire, et plus particulièrement le débit d'une communication observé entre un satellite serveur et un équipement utilisateur du réseau satellitaire, et ainsi d'être en mesure d'adapter les paramètres de transmission de ce dernier pour optimiser ses performances. Plus particulièrement, grâce à la connaissance du débit de la communication en fonction, dans un mode particulier de réalisation, de la bande passante allouée à cette communication, de la puissance d'émission du satellite serveur, de la distance séparant le satellite serveur de l'équipement utilisateur, du rapport des gains d'antenne du satellite serveur et de satellites susceptibles d'interférer la communication, et de la topologie du réseau satellitaire dans la zone d'interférence, l'invention permet avantageusement de sélectionner des paramètres de transmission destinés à être appliqués au ou par le satellite serveur qui permettent de garantir dans un environnement réel (i.e. en présence d'interférences) une qualité de service donnée au niveau de l'équipement utilisateur. Aucune limitation n'est attachée à la nature des paramètres de transmission en question : il peut s'agir par exemple de la puissance d'émission du satellite serveur, du débit de la communication, de la bande passante allouée à la communication, de l'angle d'élévation du satellite serveur, etc.

Ainsi, l'invention peut être exploitée en amont d'une communication : elle permet alors à l'opérateur du réseau satellitaire de savoir *a priori* si un satellite serveur répond à une qualité de service demandée par un équipement utilisateur. S'il n'est pas possible de déterminer des paramètres de transmission du satellite vérifiant cette qualité de service, l'opérateur peut avantageusement anticiper un échec de la communication et envisager en amont de la communication différentes actions visant à améliorer l'expérience de l'utilisateur : information de l'utilisateur, rejet de la communication, sélection d'un autre satellite pour servir la communication, etc.

Mais l'invention peut également être utilisée en cours de communication pour adapter de façon dynamique un ou plusieurs paramètres de transmission de cette communication, telle que la puissance d'émission du satellite serveur, la bande passante allouée à la communication ou le débit de la communication.

Par exemple, dans un mode particulier de réalisation, ledit au moins un paramètre de transmission est la puissance d'émission du satellite serveur et l'étape de détermination comprend :

- une estimation du débit de la communication pour une puissance d'émission du satellite donnée dite initiale ; et
- si le débit estimé est inférieur à un seuil déterminé, une augmentation de ladite puissance d'émission initiale.

Dans une variante de ce mode de réalisation, on peut envisager un maintien de la puissance d'émission initiale si le débit estimé est supérieur ou égal au seuil ou une diminution de la puissance d'émission initiale afin d'optimiser l'efficacité énergétique du réseau satellitaire.

Dans un mode particulier de réalisation, l'étape de détermination utilise une relation équivalente à la relation :

$$T_u = W \log_2 \left( 1 + \cfrac{1}{\cfrac{D\eta\rho P dsat^2}{P_n} + \cfrac{N_{th} dsat^2}{K P_n G_n}} \right)$$

où $T_u$ désigne le débit de la communication, W la bande passante allouée à la communication, $\eta$ le rapport des gains des antennes des satellites du réseau satellitaire susceptibles d'interférer la communication situés dans la zone interférente et du gain de l'antenne du satellite serveur, $G_n$ le gain d'antenne du satellite serveur, P et Pn les puissances d'émission respectivement desdits satellites susceptibles d'interférer la communication (puissance moyenne) et du satellite serveur, *dsat* la distance entre le satellite serveur et l'équipement utilisateur, $\rho$ la densité des satellites du réseau satellitaire susceptibles d'interférer la communication dans la zone interférente et D un facteur dépendant de l'altitude du satellite serveur, de l'angle d'élévation minimum et d'un rayon de la Terre.

Ce mode de réalisation fournit une relation particulièrement simple à utiliser dans le cadre de l'invention pour déterminer le ou les paramètres de transmission du satellite serveur.

On note que cette relation peut également être utilisée pour déterminer d'autres paramètres visant à garantir une qualité de service donnée pour l'équipement utilisateur, comme par exemple l'altitude du satellite serveur ou son angle d'élévation par rapport à l'équipement utilisateur, ces paramètres pouvant être exploités par l'opérateur pour configurer le réseau satellitaire ou pour sélectionner un satellite serveur alternatif pour servir l'équipement utilisateur s'il n'est pas possible de déterminer des paramètres de transmission du satellite serveur considéré initialement permettant d'atteindre un débit souhaité pour la communication.

Dans un mode particulier de réalisation de l'invention, le procédé de détermination collaboratif est mis en œuvre par un ordinateur.

L'invention vise également un programme d'ordinateur sur un support d'enregistrement, ce programme étant susceptible d'être mis en œuvre dans un ordinateur ou plus généralement dans un dispositif de détermination conforme à l'invention et comporte des instructions adaptées à la mise en œuvre d'un procédé de détermination tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du programme d'ordinateur mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution du procédé d'apprentissage collaboratif, conforme à l'invention.

Selon un autre aspect, l'invention vise également un système de communication comprenant au moins un équipement utilisateur et un dispositif de détermination selon l'invention configuré pour déterminer au moins un paramètre de transmission d'une communication entre ledit équipement utilisateur et un satellite dit serveur du réseau de communication satellitaire.

Il convient de noter qu'on peut envisager, dans d'autres modes de réalisation, que le procédé de détermination, le dispositif de détermination et le système de communication selon l'invention présentent en combinaison tout ou partie des caractéristiques précitées.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente un système de communication conforme à l'invention dans un mode particulier de réalisation ;

[Fig. 2] la figure 2 représente un exemple d'architecture matérielle d'un satellite hébergeant un dispositif de détermination conforme à l'invention, dans un mode particulier de réalisation ;

[Fig. 3] la figure 3 représente une zone d'interférence considérée pour une communication entre un satellite SATn et un équipement utilisateur UEkn ;

[Fig. 4] la figure 4 illustre, sous forme d'ordinogramme, les principales étapes d'un procédé de détermination selon l'invention, dans un mode particulier de réalisation.

**Description de l'invention**

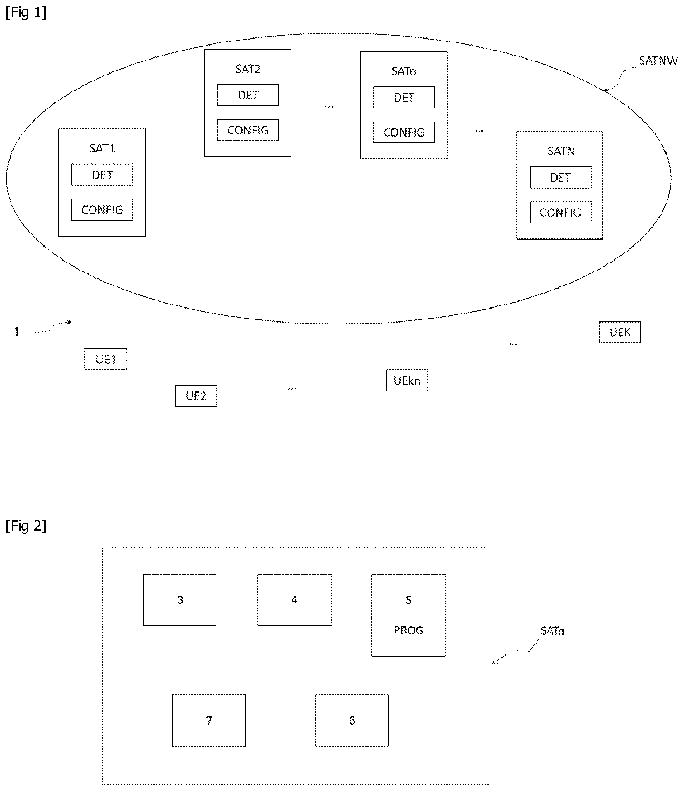

La **figure 1** représente, dans son environnement, un système 1 de communication conforme à l'invention, dans un mode particulier de réalisation.

Le système 1 de communication comprend au moins un équipement utilisateur UE1, UE2,...UEK, K désignant un entier supérieur ou égal à 1, d'un réseau de communication satellitaire SATNW s'appuyant sur une pluralité de satellites SAT1, SAT2,..., SATN, N désignant un entier supérieur à 1. Les équipements utilisateurs UE1,...,UEK sont situés ici à la surface de la Terre. Les satellites SAT1,..., SATN sont par exemple des satellites tous situés sur une même orbite, à une altitude h par rapport à la surface terrestre. A titre illustratif, cette altitude h est typiquement supérieure à 300km pour des satellites en orbite basse, et est de l'ordre de 36000km pour des satellites géostationnaires.

On note toutefois que l'invention ne se limite pas à des satellites tous situés à une même altitude (hauteur). L'invention peut s'appliquer à d'autres configurations de satellites (ex. plusieurs orbites situées à des altitudes différentes).

Dans le mode de réalisation décrit ici, chaque satellite SATn, n=1,...,N, embarque un dispositif 2 de détermination selon l'invention. Ce dispositif 2 de détermination est configuré pour déterminer au moins un paramètre de transmission d'une communication (établie ou à venir) entre le satellite SATn dans lequel il est embarqué, n étant un entier compris entre 1 et N, et un équipement utilisateur UEkn situé à la surface de la Terre, kn étant un entier compris entre 1 et K, se trouvant dans la zone de couverture du satellite SATn et connecté à ce dernier. On dit alors que le satellite SATn est un satellite serveur de l'équipement utilisateur UEkn, autrement dit, c'est lui qui émet et reçoit les données destinées et provenant de l'équipement utilisateur UEkn et transitant par le réseau satellitaire SATNW. On s'intéresse ici aux communications en liaison descendante, c'est-à-dire du satellite serveur vers l'équipement utilisateur.

On note qu'aucune limitation n'est attachée à la nature des équipements utilisateurs UE1,...,UEK. Dans l'exemple envisagé ici, ces équipements utilisateurs sont des terminaux mobiles, comme par exemple des téléphones intelligents (ou « smartphones » en anglais) ou des ordinateurs portables. Toutefois en variante, il peut s'agir de terminaux fixes, de stations d'émission/réception terrestres, etc.

Dans le mode de réalisation décrit ici, chaque dispositif 2 de détermination conforme à l'invention s'appuie sur l'architecture matérielle de l'équipement physique dans lequel il est embarqué, à savoir ici le satellite SATn dans lequel il est embarqué. Cette architecture matérielle est représentée schématiquement sur la **figure 2**. Elle comprend notamment un processeur 3, une mémoire vive 4, une mémoire morte 5, une mémoire non volatile 6 et des moyens de communications 7 qui permettent au satellite SATn de communiquer avec les équipements utilisateurs du réseau satellitaire se trouvant sous sa couverture, et le cas échéant avec un centre ou dispositif de gestion du réseau satellitaire (non représenté sur la figure 1).

La mémoire morte 5 est un support d'information sur lequel est enregistré un programme d'ordinateur PROG, lisible par le processeur 3, et comportant des instructions pour l'exécution d'un procédé de détermination selon l'invention.

Le programme PROG définit des modules fonctionnels du dispositif 2 de détermination conforme à l'invention embarqué dans le satellite SATn qui s'appuie sur ou commande les éléments matériels 3 à 7 évoqués ci-avant. Ces modules comprennent notamment, dans le mode de réalisation décrit ici, comme illustré sur la figure 1 :

- un module DET de détermination, paramétré (i.e. configuré) pour déterminer au moins un paramètre de transmission d'une communication avec un équipement utilisateur (par exemple l'équipement utilisateur UEkn dans l'exemple envisagé précédemment) se trouvant dans la couverture du satellite SATn embarquant le dispositif 2 de détermination et pour lequel le satellite SATn est un satellite serveur. Le module DET est configuré pour déterminer le ou les paramètres de transmission en question à partir d'une connaissance dont il dispose d'un débit de la communication en fonction d'une bande passante $W$ allouée à cette communication, d'une puissance $Pn$ d'émission du satellite SATn (et éventuellement des satellites susceptibles d'interférer la communication si tous les satellites du réseau satellitaire n'utilisent pas la même puissance d'émission), d'une distance $dsat$ entre le satellite SATn et l'équipement utilisateur considéré (ex. UEkn dans l'exemple envisagé ici), d'un rapport des gains d'antenne des satellites du réseau satellitaire SATNW susceptibles d'interférer la communication et du satellite SATn et d'une topologie du réseau satellitaire SATNW dans une zone dite d'interférence, référencée Z, où se trouvent lesdits satellites susceptibles d'interférer la communication. On note que les satellites susceptibles d'interférer la communication sont les satellites qui utilisent simultanément à la communication les mêmes ressources qu'utilise le satellite SATn en liaison descendante pour communiquer avec l'équipement utilisateur UEkn, par exemple, la même bande de fréquences, les mêmes codes, etc. selon la technique d'accès multiples considérée ; et

- un module CONFIG de configuration, paramétré pour configurer le satellite SATn pour qu'il applique le ou les paramètres de transmission déterminés par le module DET lors de la communication avec l'équipement utilisateur considéré (ex. UEkn dans l'exemple envisagé ici).

Différents paramètres de transmission peuvent être déterminés par le dispositif 2 de détermination intégré dans un satellite SATn, n=1,...,N, ces paramètres pouvant différer d'un satellite à l'autre en fonction de la flexibilité dont l'opérateur souhaite disposer. Ainsi par exemple, le dispositif 2 de détermination peut s'attacher à déterminer la puissance d'émission appliquée par le satellite SATn durant la communication, ou le débit de la communication, ou encore la bande passante allouée à la communication ou encore un angle d'élévation du satellite SATn lors de la communication, etc.

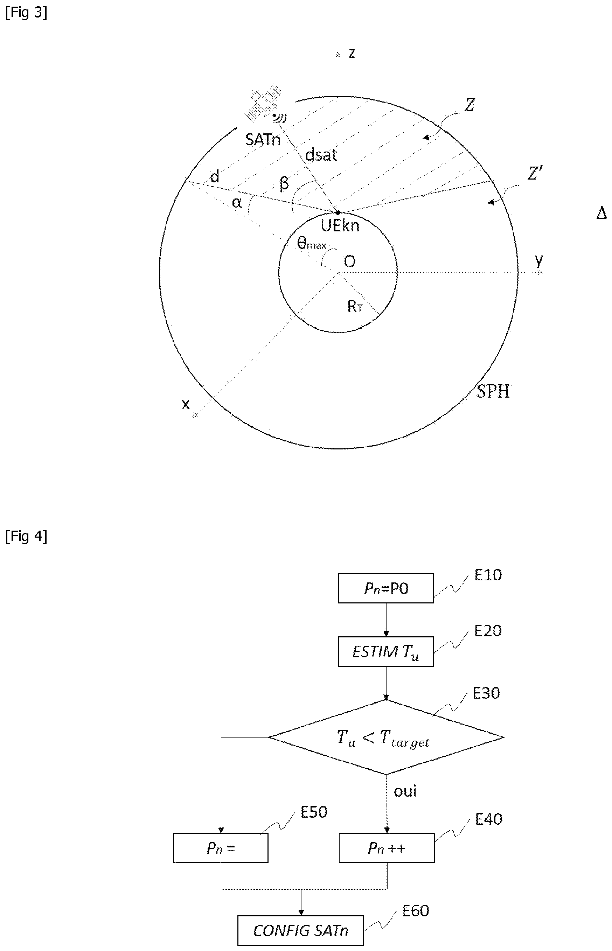

Nous allons maintenant décrire, en référence aux figures 3 et 4, comment la détermination d'un (ou de plusieurs) paramètre(s) de transmission est réalisée par le dispositif 2 de détermination selon l'invention. Comme mentionné précédemment, conformément à l'invention, le ou les paramètres de transmission sont déterminés par le dispositif 2 de détermination à partir d'une connaissance d'un débit de la communication en fonction de caractéristiques de transmission du satellite serveur et d'une topologie du réseau satellitaire dans une zone d'interférence dans laquelle se trouvent des satellites susceptibles d'interférer la communication.

A titre illustratif, on s'intéresse ici plus particulièrement à la communication en liaison descendante entre le satellite SATn et l'équipement utilisateur UEkn que l'on suppose se trouver dans la zone de couverture du satellite SATn (autrement dit, dans la zone couverte par le lobe principal de l'antenne du satellite SATn) et connecté au satellite SATn pour recevoir et/ou transmettre des données durant la communication. On note que cette détermination peut être réalisée en amont de la communication, typiquement en prévision de cette communication, permettant à l'opérateur du réseau satellitaire SATNW d'anticiper les paramètres à appliquer lors des communications à venir pour s'assurer de fournir une qualité de service données à ses utilisateurs (par exemple un débit cible donné), ou en variante, pendant une communication, permettant ainsi à l'opérateur d'adapter de façon dynamique les paramètres de transmission appliqués par le satellite pour atteindre une qualité de service (ex. un débit de communication) donnée. Comme mentionné précédemment, l'invention peut également être utilisée par l'opérateur du réseau satellitaire pour déterminer d'autres paramètres visant à garantir une qualité de service donnée pour un équipement utilisateur et de paramétrer son réseau satellitaire en conséquence, comme par exemple l'altitude du satellite serveur (avant sa mise sur orbite) ou son angle d'élévation par rapport à l'équipement utilisateur, ces paramètres pouvant être exploités par l'opérateur pour configurer le réseau satellitaire ou pour sélectionner un autre satellite serveur pour servir l'équipement utilisateur.

A titre illustratif, on se place dans la suite de la description dans le deuxième cas de figure (adaptation dynamique du paramètre de transmission d'une communication en cours), et on suppose que le paramètre de transmission que l'on souhaite déterminer (et éventuellement adapter) est la puissance d'émission notée $P_n$ du satellite SATn.

Comme mentionné précédemment, dans le mode de réalisation décrit ici, pour déterminer la puissance d'émission (ou un paramètre de transmission de la communication de manière générale), le dispositif 2 de détermination s'appuie sur une connaissance du débit de la communication en fonction de la bande passante $W$ allouée à cette communication, de la puissance $P_n$ d'émission du satellite serveur SATn (et éventuellement la puissance moyenne $P$ d'émission des autres satellites du réseau satellitaire), de la distance *dsat* entre le satellite serveur SATn et l'équipement utilisateur UEkn, du rapport des gains d'antenne du satellite serveur SATn et des satellites du réseau satellitaire SATNW susceptibles d'interférer la communication, et de la topologie du réseau satellitaire SATNW dans la zone d'interférence Z dans laquelle se trouvent lesdits satellites susceptibles d'interférer la communication.

La **figure 3** représente la zone d'interférence Z (en traits hachurés) considérée dans le mode de réalisation décrit ici. Il s'agit d'une calotte sphérique correspondant à une portion de la sphère SPH ayant pour rayon l'orbite des satellites SAT1,...,SATN du réseau satellitaire SATNW.

Plus spécifiquement, sont considérés comme susceptibles de générer de l'interférence sur la communication entre le satellite SATn et l'équipement utilisateur UEkn, les satellites du réseau satellitaire SATNW qui utilisent simultanément à la communication, les mêmes ressources que le satellite SATn utilise pour communiquer en liaison descendante avec l'équipement utilisateur UEkn, comme par exemple la même bande de fréquences. On fait l'hypothèse ici que tous les satellites du réseau satellitaire SATNW en visibilité directe avec l'équipement utilisateur UEkn vérifient cette condition par souci de simplification, c'est-à-dire les satellites situés dans la portion de sphère Z' (également zone d'interférence au sens de l'invention) de la sphère SPH délimitée par le plan horizontal $\Delta$ orthogonal au rayon $R_T$ de la Terre en un point où se trouve situé l'équipement utilisateur UEkn (i.e. tangent à la Terre en l'équipement utilisateur UEkn). On note que cette hypothèse est réaliste car dans un tel réseau satellitaire, *a priori* tous les satellites du réseau sont utilisés pour transmettre des données vers des utilisateurs du réseau satellitaire et configurés pour exploiter l'ensemble des ressources dont il dispose afin de maximiser les performances du réseau. Il en résulte que l'utilisation simultanée des mêmes ressources par l'ensemble des satellites du réseau satellitaire est une hypothèse que vérifie un réseau satellitaire avec une forte probabilité.

Si cette hypothèse n'est pas vérifiée pour le réseau satellitaire considérée, il suffit de limiter l'étude aux satellites situés dans la portion de sphère Z' utilisant simultanément les mêmes ressources que le satellite serveur SATn utilise en liaison descendante pour communiquer avec l'équipement utilisateur UEkn.

Par ailleurs, l'inventeur a constaté qu'en deçà d'un certain angle d'élévation par rapport à l'équipement utilisateur UEkn, noté $\alpha$, typiquement $\alpha$ = 30°, l'interférence générée par les satellites se trouvant dans la zone Z' n'a qu'un faible impact sur les performances de la communication entre le satellite SATn et l'équipement utilisateur UEkn et peut être négligée, de sorte que dans la suite de la description on considère une zone d'interférence Z correspondant à la calotte sphérique délimitée par le disque parallèle au plan $\Delta$ correspondant à un angle d'élévation par rapport à l'équipement utilisateur UEkn égal à $\alpha$. On note que la valeur 30° est une valeur typique fournie par les constructeurs de satellites, mais l'invention s'applique à d'autres valeurs de $\alpha$ (par exemple à des valeurs inférieures à 30°).

De façon ingénieuse, l'inventeur a évalué de façon globale (plutôt qu'individuellement pour chaque satellite) l'interférence générée par l'ensemble des satellites susceptibles d'interférer la communication du satellite SATn avec l'équipement utilisateur UEkn situés dans la zone Z ainsi définie. A cet effet, il a considéré la topologie du réseau satellitaire SATNW dans cette zone Z et plus spécifiquement, dans le mode de réalisation décrit ici, la densité $\rho$ des satellites susceptibles d'interférer la communication se trouvant dans la zone d'interférence Z (i.e. nombre de satellites par unité de surface), l'altitude h des satellites et plus particulièrement du satellite serveur SATn, ainsi que l'angle $\alpha$ d'élévation minimum des satellites susceptibles d'interférer la communication se trouvant situés dans la zone d'interférence Z (à savoir ici $\alpha$ = 30°).

En variante, il est possible de considérer d'autres éléments représentatifs de la topologie du réseau satellitaire comme par exemple la probabilité qu'un satellite génère une interférence affectant la communication entre le satellite SATn et l'équipement utilisateur UEkn, autrement dit, la probabilité que le satellite en question se trouve dans la zone d'interférence Z ou Z'.

Plus spécifiquement, l'inventeur a avantageusement modélisé l'impact $I_Z$ global des satellites, autrement dit l'interférence globale générée par ces derniers, sur la communication entre le satellite SATn et l'équipement utilisateur UEkn comme l'intégrale (double) sur la zone d'interférence Z de la puissance reçue par l'équipement utilisateur UEkn lors de la communication en provenance de l'ensemble des satellites se trouvant dans la zone Z à l'exception du satellite SATn, soit :

$$I_Z \approx \iint_Z \frac{KPG\rho}{d^2} r^2 \sin\theta \, \mathrm{d}\theta \, \mathrm{d}\varphi$$

où K désigne la constante de propagation, connue en soi, P la puissance d'émission moyenne des satellites susceptibles d'interférer la communication se trouvant se trouvant dans la zone d'interférence Z, $\rho$ la densité de ces satellites, G le gain des antennes de ces satellites dans la direction de l'équipement utilisateur UEkn et d la distance séparant l'équipement utilisateur UEkn d'un satellite de la zone Z ayant un angle d'élévation par rapport à l'équipement utilisateur UEkn égal à l'angle d'élévation minimum $\alpha$. Les angles $\theta$ et $\varphi$ représentent les angles standards d'un satellite du réseau satellitaire appartenant à la zone d'interférence Z dans un repère sphérique connu en soi, non représenté sur la figure 3 par souci de simplification ($\theta$ est défini par rapport à l'axe vertical (Oz), O désignant le centre de la Terre, $\varphi$ est défini dans le plan (xOy) et r est la distance séparant le satellite considéré du centre de la Terre, soit $r^2 = (R_T + h)^2$ où $R_T$ désigne le rayon de la Terre ($R_T$ = 6371 km) et h l'altitude des satellites (commune à tous les satellites dans l'exemple envisagé ici).

Dans cette relation, l'inventeur a fait l'hypothèse (réaliste et hautement probable) que le rapport de gains G et la puissance P sont les mêmes pour tous les satellites susceptibles d'interférer la communication se trouvant se trouvant dans la zone Z : en effet, l'équipement utilisateur UEkn n'étant pas dans la couverture du lobe principal du diagramme de rayonnement des antennes de ces satellites (qui seraient sinon satellites serveurs pour l'équipement utilisateur UEkn), il est commun de considérer (cf. spécifications techniques des réseaux satellitaires) qu'un même gain s'applique en direction de l'équipement utilisateur UEkn en dehors de ce lobe principal, par exemple -30dB par rapport au gain maximum du lobe principal de l'antenne du satellite SATn. En outre, pour maximiser le débit pouvant être atteint lors d'une communication, il est classique de configurer (tous) les satellites pour qu'ils émettent avec la puissance maximale Pmax autorisée (P=Pmax). Dans l'hypothèse où une puissance d'émission différente est utilisée par les satellites du réseau satellitaire, l'expression de $I_Z$ donnée ci-dessus modélise bien l'impact des satellites sur la communication entre le satellite SATn et l'équipement utilisateur UEkn dès lors que P désigne alors la puissance moyenne d'émission des satellites.

L'expression de $I_Z$ peut donc s'écrire sous ces hypothèses :

$$I_Z = KPG\rho \iint_Z \frac{(R_T + h)^2}{d^2} \sin\theta \, \mathrm{d}\theta \, \mathrm{d}\varphi$$

En posant :

$$D = \iint_Z \frac{(R_T + h)^2}{d^2} \sin\theta \, d\theta \, d\varphi$$

on peut montrer, par des considérations géométriques, que :

$$d = -R_T \sin\alpha + \sqrt{R_T h(R_T + \sin\alpha)^2 + h^2}$$

et

$$D = \frac{\pi(R_T + h)}{R_T} \log\frac{A}{B}$$

avec :

$$A = (R_T + h)^2 + R_T^{\,2} - 2R_T(R_T + h)\left(\frac{R_T + d\sin\alpha}{R_T + h}\right)$$

$$B = (R_T + h)^2 + R_T^{\,2} - 2R_T(R_T + h)$$

Il en résulte que :

$$\frac{A}{B} = \frac{2R_T(h - d\sin\alpha)}{h^{\,2}} + 1$$

On note que si les satellites du réseau satellitaire ont des altitudes différentes, le même raisonnement s'applique à chaque sous-ensemble de satellites situés à la même altitude, la contribution globale des satellites étant obtenue en sommant les contributions de chaque sous-ensemble pour chaque altitude différente (on considère alors une densité distincte par altitude différente).

Par ailleurs, le débit $T_u$ maximal de la communication entre le satellite SATn et l'équipement utilisateur UEKn en liaison descendante est donné par la capacité du canal séparant le satellite SATn et l'équipement utilisateur UEKn, soit de façon connue :

$$T_u = W \log_2\left(1 + \frac{\frac{KP_n G_n}{dsat^2}}{I_Z + N_{th}}\right)$$

où $W$ désigne la bande passante allouée à la communication, $P_n$ la puissance d'émission du satellite SATn lors de la communication vers l'équipement utilisateur UEkn, $G_n$ le gain de l'antenne du satellite SATn dans la direction de l'équipement utilisateur UEkn, *dsat* la distance séparant le satellite SATn de l'équipement utilisateur UEkn, et $N_{th}$ la variance du bruit thermique au niveau de l'équipement utilisateur UEkn que l'on suppose connue du satellite SATn (obtenue soit par un calcul connu de l'homme du métier soit reçue de l'équipement utilisateur UEkn). Autrement dit, en remplaçant dans cette expression la valeur de $I_Z$, on obtient :

$$T_u = W \log_2\left(1 + \frac{1}{\frac{D\eta\rho P dsat^2}{P_n} + \frac{N_{th} dsat^2}{KP_n G_n}}\right) \quad (1)$$

où $\eta$ désigne le ratio des gains d'antenne G et $G_n$ ($\eta = G/G_n$), et avec :

$$dsat = -R_T \sin \beta + \sqrt{R_T h (R_T + \sin \beta)^2 + h^2}$$

$\beta$ désignant l'angle d'élévation du satellite SATn par rapport à l'équipement utilisateur UEkn, cet angle correspondant à l'angle que fait la droite reliant l'équipement utilisateur UEkn au satellite serveur SATn par rapport au plan $\Delta$ tangent à la Terre en l'équipement utilisateur UEkn. On note que l'angle $\beta$ dépend de la position du satellite SATn sur son orbite, qui est connue de l'opérateur du réseau satellitaire SATNW, et qui peut être transmise par ce dernier (par exemple via le centre de gestion du réseau satellitaire) au satellite pour lui permettre de calculer l'angle $\beta$ à partir de sa propre position et de celle de l'équipement utilisateur UEkn. Par ailleurs, dans l'équation (1), P désigne la puissance moyenne des satellites interféreurs, connue de l'opérateur du réseau satellitaire, et qui peut être fournie par ce dernier au satellite SATn.

La densité $\rho$ est égale au ratio du nombre Nsat de satellites susceptibles d'interférer la communication se trouvant dans la zone d'interférence Z et de la surface S de la zone d'interférence Z.

Le nombre Nsat est une donnée connue de l'opérateur du réseau satellitaire SATNW et fourni par ce dernier (par exemple via le centre de gestion du réseau satellitaire) au dispositif 2 de détermination.

La surface S de la zone d'interférence Z peut être obtenue aisément via des considérations géométriques à partir de la relation suivante :

$$S = 2\pi (R_T + h)(1 - \cos \theta_{max})$$

avec :

$$\cos \theta_{max} = \frac{R_T + d \sin \alpha}{R_T + h}$$

($\theta_{max}$ est représenté sur la figure 3 pour faciliter la compréhension).

Ainsi, en appliquant l'expression (1) ainsi que les relations qui précèdent donnant les différentes quantités impliquées dans l'équation (1), le module DET de détermination dispose d'une connaissance du débit $T_u$ de la communication entre le satellite SATn et l'équipement utilisateur UEkn. Il convient de noter que dans l'équation (1), les valeurs de G et Gn sont connues du dispositif 2 de détermination à partir des diagrammes de rayonnement des antennes utilisées par les satellites, $R_T$ est une constante prédéterminée connue de l'homme du métier, $\alpha$ est ici une constante prise égale à 30° et h est fixée par l'opérateur du réseau satellitaire SATNW lors du déploiement de ce dernier.

Nous allons maintenant décrire en référence à la **figure 4** comment le dispositif 2 de détermination du satellite SATn exploite cette connaissance pour déterminer la puissance $P_n$ à utiliser lors de la communication, dans un mode particulier de réalisation. Comme mentionné précédemment, on se place à titre illustratif dans le cas où la puissance $P_n$ est adaptée dynamiquement par le dispositif 2 de détermination en fonction d'une valeur de débit $T_{target}$ cible que l'opérateur souhaite garantir à l'équipement utilisateur UEkn lors de la communication.

Avant toute adaptation, la puissance d'émission $P_n$ du satellite SATn est fixée à une valeur initiale P0 soit $P_n$=P0 (étape E10).

Puis, le module DET de détermination du dispositif 2 de détermination estime le débit $T_u$ de la communication avec l'équipement utilisateur UEkn compte tenu de cette puissance d'émission initiale P0 appliquée par le satellite SATn lors de l'envoi de données à destination de l'équipement utilisateur UEkn (étape E20).

A cet effet, dans le mode de réalisation décrit ici, le module DET de détermination utilise l'expression suivante (1) introduite précédemment.

Le module DET de détermination compare alors la valeur $T_u$ du débit estimée avec la valeur cible $T_{target}$ (étape test E30).

Si $T_u < T_{target}$ (réponse oui à l'étape test E30), le module CONFIG de configuration augmente la puissance d'émission $P_n$ du satellite SATn (étape E40).

Sinon (réponse non à l'étape test E30), dans le mode de réalisation décrit ici, il maintient la puissance $P_n$ à sa valeur courante (par exemple P0 dans l'exemple envisagé ici) (étape E50).

En variante, si la valeur $T_u$ du débit estimée dépasse d'un seuil THR prédéterminé la valeur cible $T_{target}$, alors le module CONFIG de configuration diminue la puissance d'émission $P_n$ du satellite SATn afin d'optimiser l'efficacité énergétique du réseau satellitaire.

L'augmentation (respectivement la diminution) de la puissance d'émission $P_n$ du satellite SATn peut être réalisée de différentes manières.

Dans une première variante de réalisation, le module CONFIG de configuration peut ajouter ou soustraire à la puissance $P_n$ une quantité $\delta P$ prédéterminée.

Dans une deuxième variante de réalisation, le module CONFIG de configuration peut utiliser l'expression (1) pour déterminer de quelle quantité augmenter ou réduire la puissance $P_n$ du satellite SATn, en cherchant la quantité $\delta P$ telle que $T_u = T_{target}$ ou s'approche au plus près de $T_{target}$ afin d'optimiser l'efficacité énergétique du réseau satellitaire. Une telle résolution d'équation connaissant l'expression (1) peut être réalisée aisément numériquement (par exemple par dichotomie ou à l'aide d'un autre algorithme de résolution d'équation) et ne poserait pas de problème en soi à l'homme du métier.

Puis le module CONFIG de configuration configure l'émetteur du satellite SATn pour qu'il utilise la puissance d'émission $P_n$ (étape E60).

Comme mentionné précédemment, dans un autre mode de réalisation, le procédé de détermination selon l'invention peut être mis en œuvre pour déterminer *a priori* en amont de la communication avec l'équipement utilisateur UEkn, la puissance d'émission $P_n$ à appliquer lors de cette communication pour atteindre une valeur de débit cible $T_{target}$. A cet effet, le module DET de détermination cherche la valeur de $T_u = T_{target}$ permettant de résoudre l'équation $T_u = T_{target}$ en utilisant la relation (1), par exemple numériquement comme évoqué ci-avant.

Par ailleurs, dans le mode de réalisation décrit ici, on s'est intéressé à la détermination de la puissance d'émission $P_n$ du satellite SATn. Dans un autre mode de réalisation on peut envisager de déterminer un autre paramètre de transmission appliqué par le satellite SATn, figurant dans la relation (1) ou pouvant être déterminé à partir d'un paramètre figurant dans la relation (1), comme par exemple le débit de transmission, la bande passante allouée à la communication, l'angle d'élévation du satellite SATn, etc. Dans ces autres modes de réalisation, si la même puissance d'émission est utilisée par tous les satellites y compris le satellite serveur, alors $P=Pn$ ce qui permet de simplifier encore davantage la relation (1).

En outre, dans le mode de réalisation décrit ici, le dispositif 2 de détermination est embarqué dans chaque satellite du réseau satellitaire. Dans un autre mode de réalisation, le dispositif 2 de détermination peut être embarqué dans un centre ou un dispositif de gestion du réseau satellitaire, situé par exemple au sol. Le centre ou dispositif de gestion transmet alors au satellite SATn la puissance d'émission ou plus généralement le paramètre de transmission qu'il a déterminé, pour que celui-ci l'applique lors de sa communication avec l'équipement utilisateur UEkn (configuration au sens de l'invention).

Bien entendu ce qui vient d'être décrit pour le satellite SATn et l'équipement utilisateur UEkn s'applique de façon identique ou similaire aux autres satellites et aux équipements utilisateurs servis par ces derniers.

On note qu'outre la détermination de paramètres de transmission, la relation (1) peut avantageusement être utilisée pour prévoir et quantifier l'impact de caractéristiques orbitales du satellite serveur (altitude, angle d'élévation, etc.).

L'invention peut être appliquée par exemple à un réseau de téléphonie mobile satellitaire. Elle peut s'appliquer notamment à des systèmes cellulaires fondés sur une technologie d'accès de type OFDMA (pour « Orthogonal Frequency Division Multiple Access » en anglais) tels que les systèmes LTE-A et 5G définis par le standard 3GPP. L'invention peut toutefois également s'appliquer à d'autres systèmes satellitaires non cellulaires.

**Revendications**

1. Procédé de communication entre un satellite dit serveur, SATn, d'un réseau de communication satellitaire, SATNW, et un équipement utilisateur, UEnk, ledit procédé comprenant :

    - une étape de détermination (E30,E40) d'au moins un paramètre de transmission de la communication à partir d'une connaissance d'un débit de la communication en fonction de caractéristiques de transmission du satellite serveur et d'une topologie du réseau satellitaire dans une zone dite d'interférence où se trouvent des satellites susceptibles d'interférer la communication ; et
    - une étape de configuration (E60) du satellite serveur pour appliquer ledit au moins un paramètre de transmission déterminé lors de la communication avec l'équipement utilisateur.

2. Procédé de communication selon la revendication 1 dans lequel lors de l'étape de détermination, ledit au moins un paramètre de transmission de la communication est déterminé à partir d'une connaissance du débit de la communication en fonction d'une bande passante allouée à cette communication, d'une puissance d'émission du satellite serveur, d'une distance entre le satellite serveur et l'équipement utilisateur, d'un rapport des gains d'antenne du satellite serveur et desdits satellites susceptibles d'interférer la communication et de ladite topologie du réseau satellitaire dans ladite zone d'interférence.

3. Procédé de communication selon la revendication 1 ou 2 dans lequel ledit au moins un paramètre de transmission comprend la puissance d'émission du satellite serveur, le débit de la communication, et/ou la bande passante allouée à la communication.

4. Procédé de communication selon l'une quelconque des revendications 1 à 3 dans lequel la topologie du réseau satellitaire comprend au moins un élément parmi une densité des satellites susceptibles d'interférer la communication du réseau satellitaire dans ladite zone d'interférence, une altitude du satellite serveur, un angle d'élévation minimum des satellites susceptibles d'interférer la communication, et/ou une probabilité qu'un satellite se trouve dans ladite zone d'interférence et soit susceptible d'interférer la communication.

5. Procédé de communication selon la revendication 4 dans lequel l'étape de détermination utilise une relation équivalente à la relation :

$$T_u = W \log_2 \left( 1 + \cfrac{1}{\cfrac{D\eta\rho P\,dsat^2}{P_n} + \cfrac{N_{th}\,dsat^2}{KP_nG_n}} \right)$$

où $T_u$ désigne le débit de la communication, W la bande passante allouée à la communication, $\eta$ le rapport des gains des antennes des satellites du réseau satellitaire susceptibles d'interférer la communication situés dans la zone interférente et du gain de l'antenne du satellite serveur, $G_n$ le gain du satellite serveur, $P$ et $P_n$ les puissances d'émission respectives des satellites susceptibles d'interférer la communication du réseau satellitaire dans la zone interférente et du satellite serveur, $dsat$ la distance entre le satellite serveur et l'équipement utilisateur, $\rho$ la densité des satellites susceptibles d'interférer la communication du réseau satellitaire dans la zone interférente et D un facteur dépendant de l'altitude du satellite serveur, de l'angle d'élévation minimum et d'un rayon de la Terre.

6. Procédé de communication selon l'une quelconque des revendications 1 à 5 dans lequel, ledit au moins un paramètre de transmission est la puissance d'émission du satellite serveur et l'étape de détermination comprend :

   - une estimation (E20) du débit de la communication pour une puissance d'émission du satellite serveur donnée dite initiale ; et
   - si le débit estimé est inférieur à un seuil déterminé, une augmentation (E40) de ladite puissance d'émission initiale.

7. Programme d'ordinateur, PROG, comportant des instructions pour la mise en œuvre d'un procédé de communication selon l'une quelconque des revendications 1 à 6 lorsque ledit programme est exécuté par un ordinateur.

8. Support d'enregistrement (5) lisible par un ordinateur sur lequel est enregistré un programme d'ordinateur selon la revendication 7.

9. Dispositif (2) de détermination d'au moins un paramètre de transmission d'une communication entre un satellite dit serveur d'un réseau de communication satellitaire et un équipement utilisateur, ledit dispositif comprenant :

   - un module, DET, de détermination, paramétré pour déterminer ledit au moins un paramètre de transmission de la communication à partir d'une connaissance d'un débit de la communication en fonction de caractéristiques de transmission du satellite serveur et d'une topologie du réseau satellitaire dans une zone dite d'interférence où se trouvent des satellites susceptibles d'interférer la communication ; et
   - un module, CONFIG, de configuration, paramétré pour configurer le satellite serveur pour appliquer ledit au moins un paramètre de transmission déterminé lors de la communication avec l'équipement utilisateur.

10. Dispositif de détermination selon la revendication 9 dans lequel ledit module, DET, de détermination est paramétré pour déterminer ledit au moins un paramètre de transmission de la communication à partir d'une connaissance du débit de la communication en fonction d'une bande passante allouée à cette communication, d'une puissance d'émission du satellite serveur, d'une distance entre le satellite serveur et l'équipement utilisateur, d'un rapport des gains d'antenne du satellite serveur et desdits satellites susceptibles d'interférer la communication et de ladite topologie du réseau satellitaire dans ladite zone d'interférence.

11. Satellite, SATn, d'un réseau satellitaire comprenant un dispositif de détermination selon la revendication 9 ou 10.

12. Dispositif de gestion d'un réseau satellitaire comprenant un dispositif de détermination selon la revendication 9 ou 10.

**13.** Système (1) de communication comprenant au moins un équipement utilisateur, UEkn, d'un réseau de communication satellitaire et un dispositif (2) de détermination selon la revendication 9 ou 10 configuré pour déterminer au moins un paramètre de transmission d'une communication entre ledit équipement utilisateur et un satellite dit serveur, SATn, du réseau de communication satellitaire.

**Patentansprüche**

**1.** Verfahren zur Kommunikation zwischen einem sogenannten Server-Satelliten, SATn, eines Satellitenkommunikationsnetzwerks, SATNW, und einer Benutzereinrichtung, UEnk, das Verfahren umfassend:

- einen Schritt des Bestimmens (E30,E40) mindestens eines Übertragungsparameters der Kommunikation ausgehend von einer Kenntnis einer Übertragungsgeschwindigkeit der Kommunikation in Abhängigkeit von Übertragungsmerkmalen des Server-Satelliten und von einer Topologie des Satellitennetzwerks in einem sogenannten Störbereich, in dem sich Satelliten befinden, die die Kommunikation stören könnten; und
- einen Schritt des Konfigurierens (E60) des Server-Satelliten, um den mindestens einen bestimmten Übertragungsparameter bei der Kommunikation mit der Benutzereinrichtung anzuwenden.

**2.** Verfahren zur Kommunikation nach Anspruch 1, wobei bei dem Schritt des Bestimmens der mindestens eine Übertragungsparameter der Kommunikation ausgehend von einer Kenntnis der Übertragungsgeschwindigkeit der Kommunikation in Abhängigkeit von einer dieser Kommunikation zugewiesenen Bandbreite, von einer Sendeleistung des Server-Satelliten, von einer Entfernung zwischen dem Server-Satelliten und der Benutzereinrichtung, von einem Verhältnis der Antennengewinne des Server-Satelliten und der Satelliten, die die Kommunikation stören könnten, und von der Topologie des Satellitennetzwerks in dem Störbereich bestimmt wird.

**3.** Verfahren zur Kommunikation nach Anspruch 1 oder 2, wobei der mindestens eine Übertragungsparameter die Sendeleistung des Server-Satelliten, die Übertragungsgeschwindigkeit der Kommunikation und/oder die der Kommunikation zugewiesene Bandbreite umfasst.

**4.** Verfahren zur Kommunikation nach einem der Ansprüche 1 bis 3, wobei die Topologie des Satellitennetzwerks mindestens ein Element unter einer Dichte der Satelliten, die die Kommunikation des Satellitennetzwerks in dem Störbereich stören könnten, einer Höhe des Server-Satelliten, einem Mindestelevationswinkel der Satelliten, die die Kommunikation stören könnten, und/oder einer Wahrscheinlichkeit, dass sich ein Satellit in dem Störbereich befindet und die Kommunikation stören könnte, umfasst.

**5.** Verfahren zur Kommunikation nach Anspruch 4, wobei der Schritt des Bestimmens eine zu der folgenden Gleichung äquivalente Gleichung verwendet:

$$T_u = W \log_2 \left( 1 + \frac{1}{\frac{D\eta\rho P dsat^2}{P_n} + \frac{N_{th} dsat^2}{K P_n G_n}} \right)$$

worin $T_u$ die Übertragungsgeschwindigkeit der Kommunikation, $W$ die der Kommunikation zugewiesene Bandbreite, $\eta$ das Verhältnis der Gewinne der Antennen der Satelliten des Satellitennetzwerks, die die Kommunikation stören könnten und sich in dem Störbereich befinden, und des Gewinns der Antenne des Server-Satelliten, $G_n$ den Gewinn des Server-Satelliten, $P$ und $P_n$ die jeweiligen Sendeleistungen der Satelliten, die die Kommunikation des Satellitennetzwerks in dem Störbereich stören könnten, und des Server-Satelliten, $dsat$ die Entfernung zwischen dem Server-Satelliten und der Benutzereinrichtung, $\rho$ die Dichte der Satelliten, die die Kommunikation des Satellitennetzwerks in dem Störbereich stören könnten, und $D$ einen Faktor, der von der Höhe des Server-Satelliten, vom Mindestelevationswinkels und von einem Radius der Erde abhängt, bezeichnet.

**6.** Verfahren zur Kommunikation nach einem der Ansprüche 1 bis 5, wobei der mindestens eine Übertragungsparameter die Sendeleistung des Server-Satelliten ist und der Schritt des Bestimmens umfasst:

- ein Schätzen (E20) der Übertragungsgeschwindigkeit der Kommunikation für eine gegebene Sendeleistung des Server-Satelliten, initiale Sendeleistung genannt; und

- wenn die geschätzte Übertragungsgeschwindigkeit geringer als ein bestimmter Schwellenwert ist, ein Erhöhen (E40) der initialen Sendeleistung.

7. Computerprogramm, PROG, das Anweisungen umfasst, die bei Ausführung des Programms durch einen Computer die Schritte des Verfahrens zur Kommunikation nach einem der Ansprüche 1 bis 6 ausführen.

8. Computerlesbares Speichermedium (5), auf dem ein Computerprogramm nach Anspruch 7 gespeichert ist.

9. Vorrichtung (2) zur Bestimmung mindestens eines Übertragungsparameters einer Kommunikation zwischen einem sogenannten Server-Satelliten eines Satellitenkommunikationsnetzwerks und einer Benutzereinrichtung, die Vorrichtung umfassend:

   - ein Modul, DET, zur Bestimmung, das dazu parametriert ist, den mindestens einen Übertragungsparameter der Kommunikation ausgehend von einer Kenntnis einer Übertragungsgeschwindigkeit der Kommunikation in Abhängigkeit von Übertragungsmerkmalen des Server-Satelliten und von einer Topologie des Satellitennetzwerks in einem sogenannten Störbereich, in dem sich Satelliten befinden, die die Kommunikation stören könnten, zu bestimmen; und
   - ein Modul, CONFIG, zur Konfiguration, das dazu parametriert ist, den Server-Satelliten zu konfigurieren, um den mindestens einen bestimmten Übertragungsparameter bei der Kommunikation mit der Benutzereinrichtung anzuwenden.

10. Vorrichtung zur Bestimmung nach Anspruch 9, wobei das Modul, DET, zur Bestimmung dazu parametriert ist, den mindestens einen Übertragungsparameter der Kommunikation ausgehend von einer Kenntnis der Übertragungsgeschwindigkeit der Kommunikation in Abhängigkeit von einer dieser Kommunikation zugewiesenen Bandbreite, von einer Sendeleistung des Server-Satelliten, von einer Entfernung zwischen dem Server-Satelliten und der Benutzereinrichtung, von einem Verhältnis der Antennengewinne des Server-Satelliten und der Satelliten, die die Kommunikation stören könnten, und von der Topologie des Satellitennetzwerks in dem Störbereich zu bestimmen.

11. Satellit, SATn, eines Satellitennetzwerks, umfassend eine Vorrichtung zur Bestimmung nach Anspruch 9 oder 10.

12. Vorrichtung zur Verwaltung eines Satellitennetzwerks, umfassend eine Vorrichtung zur Bestimmung nach Anspruch 9 oder 10.

13. Kommunikationssystem (1), umfassend mindestens eine Benutzereinrichtung, UEkn, eines Satellitenkommunikationsnetzwerks und eine Vorrichtung (2) zur Bestimmung nach Anspruch 9 oder 10, die dazu konfiguriert ist, mindestens einen Übertragungsparameter einer Kommunikation zwischen der Benutzereinrichtung und einem sogenannten Server-Satelliten, SATn, des Satellitenkommunikationsnetzwerks zu bestimmen.

**Claims**

1. Method for communication between a satellite, referred to as server satellite, SATn, of a satellite communication network, SATNW, and a user equipment, UEnk, said method comprising:

   - a step of determining (E30, E40) at least one transmission parameter of the communication on the basis of knowledge of a throughput of the communication as a function of transmission characteristics of the server satellite and of a topology of the satellite network in what is referred to as an interference zone containing satellites liable to interfere with the communication; and
   - a step of configuring (E60) the server satellite so as to apply said at least one determined transmission parameter during the communication with the user equipment.

2. Communication method according to Claim 1, wherein, during the determination step, said at least one transmission parameter of the communication is determined on the basis of knowledge of the throughput of the communication as a function of a bandwidth allocated to this communication, of a transmission power of the server satellite, of a distance between the server satellite and the user equipment, of a ratio of the antenna gains of the server satellite to said satellites liable to interfere with the communication, and of said topology of the satellite network in said interference zone.

3. Communication method according to Claim 1 or 2, wherein said at least one transmission parameter comprises the transmission power of the server satellite, the throughput of the communication, and/or the bandwidth allocated to the communication.

4. Communication method according to any one of Claims 1 to 3, wherein the topology of the satellite network comprises at least one element from among a density of the satellites liable to interfere with the communication of the satellite network in said interference zone, an altitude of the server satellite, a minimum elevation angle of the satellites liable to interfere with the communication, and/or a probability of a satellite being located in said interference zone and being liable to interfere with the communication.

5. Communication method according to Claim 4, wherein the determination step uses a relationship equivalent to the relationship:

$$T_u = W \log_2 \left( 1 + \frac{1}{\frac{D\eta\rho P dsat^2}{P_n} + \frac{N_{th} dsat^2}{K P_n G_n}} \right)$$

where $T_u$ designates the throughput of the communication, $W$ designates the bandwidth allocated to the communication, $\eta$ designates the ratio of the gains of the antennas of the satellites of the satellite network that are liable to interfere with the communication and located in the interfering zone to the gain of the antenna of the server satellite, $G_n$ designates the gain of the server satellite, $P$ and $P_n$ designate the respective transmission powers of the satellites liable to interfere with the communication of the satellite network in the interfering zone and of the server satellite, $dsat$ designates the distance between the server satellite and the user equipment, $\rho$ designates the density of the satellites liable to interfere with the communication of the satellite network in the interfering zone, and $D$ designates a factor that depends on the altitude of the server satellite, the minimum elevation angle and a radius of the Earth.

6. Communication method according to any one of Claims 1 to 5, wherein said at least one transmission parameter is the transmission power of the server satellite and the determination step comprises:

   - estimating (E20) the throughput of the communication for a given transmission power of the server satellite, referred to as initial transmission power; and
   - if the estimated throughput is less than a determined threshold, increasing (E40) said initial transmission power.

7. Computer program, PROG, comprising instructions for implementing a communication method according to any one of Claims 1 to 6 when said program is executed by a computer.

8. Recording medium (5) able to be read by a computer and on which there is recorded a computer program according to Claim 7.

9. Determination device (2) for determining at least one transmission parameter of a communication between a satellite, referred to as server satellite, of a satellite communication network and a user equipment, said device comprising:

   - a determination module, DET, parameterized to determine said at least one transmission parameter of the communication on the basis of knowledge of a throughput of the communication as a function of transmission characteristics of the server satellite and of a topology of the satellite network in what is referred to as an interference zone containing satellites liable to interfere with the communication; and
   - a configuration module, CONFIG, parameterized to configure the server satellite so as to apply said at least one determined transmission parameter during the communication with the user equipment.

10. Determination device according to Claim 9, wherein said determination module, DET, is parameterized to determine said at least one transmission parameter of the communication on the basis of knowledge of the throughput of the communication as a function of a bandwidth allocated to this communication, of a transmission power of the server satellite, of a distance between the server satellite and the user equipment, of a ratio of the antenna gains of the server satellite to said satellites liable to interfere with the communication, and of said topology of the satellite network in said interference zone.

11. Satellite, SATn, of a satellite network comprising a determination device according to Claim 9 or 10.

12. Management device for managing a satellite network comprising a determination device according to Claim 9 **or 10.**

13. Communication system (1) comprising at least one user equipment, UEkn, of a satellite communication network and a determination device (2) according to Claim 9 or 10 configured to determine at least one transmission parameter of a communication between said user equipment and a satellite, referred to as server satellite, SATn, of the satellite communication network.

[Fig 1]

[Fig 2]

[Fig 3]

[Fig 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. GUPTA** ; **S. BITRAGUNTA**. Green Satellite Communication Link Design, Optimization and Performance Analysis. *IEEE 7th Uttar Pradesh Section International Conference on Electrical, Electronics and Computer Engineering (UPCON)*, 2020, 1-5